# FASCICULE DE BREVET EUROPEEN

(11) **EP 3 923 138 B1**
(45) Date de publication et mention de la délivrance du brevet: **28.01.2026**
(21) Numéro de dépôt: 21178036.6
(22) Date de dépôt: 07.06.2021
(51) Int. Cl.: G06F 9/50, H04B 1/3827

(54) **CONTRÔLE DE DÉPORT DE TÂCHES DE CALCUL EN INFORMATIQUE EN PÉRIPHÉRIE MULTI-ACCÈS**
STEUERUNG VON RECHENAUFGABEN IN MULTIZUGANGS-PERIPHERIERECHNERN
CONTROL OF TRANSFER OF CALCULATION TASKS IN MULTI-ACCESS PERIPHERY COMPUTING

(30) Priorité: 08.06.2020 FR 2005951
(43) Date de publication de la demande: 15.12.2021
(73) Titulaire: Commissariat à l'Energie Atomique et aux Energies Alternatives, 75015 Paris (FR)
(72) Inventeur: CALVANESE STRINATI, Emilio, 38000 Grenoble (FR); BORIES, Serge, 38054 Grenoble Cedex 09 (FR)
(74) Mandataire: Santarelli

(56) Documents cités:
- US-A1- 2015 261 274
- US-A1- 2016 105 854
- WANG YICHUAN ET AL: "An energy saving based on task migration for mobile edge computing", vol. 2019, no. 1, 27 May 2019 (2019-05-27), XP055782641, Retrieved from the Internet <URL:http://link.springer.com/article/10.1186/s13638-019-1469-2/fulltext.html> DOI: 10.1186/s13638-019-1469-2
- PAVEL MACH ET AL: "Mobile Edge Computing: A Survey on Architecture and Computation Offloading", IEEE COMMUNICATIONS SURVEYS & TUTORIALS, 1 January 2017 (2017-01-01), pages 1628 - 1656, XP055408968, Retrieved from the Internet <URL:https://ieeexplore.ieee.org/stamp/stamp.jsp?tp=&arnumber=7879258> DOI: 10.1109/COMST.2017.2682318

## Description

### Domaine technique

La présente invention concerne un domaine réunissant l'informatique et les réseaux de communication. Plus précisément, elle concerne le domaine de l'informatique en périphérie multi-accès, dit MEC (d'après l'anglais : Multi-access Edge Computing). Elle concerne plus particulièrement le contrôle de déport de tâches de calcul en informatique en périphérie multi-accès.

### État de l'art antérieur

Le déport de tâches de calcul d'un terminal utilisateur vers le «cloud» est considéré comme une solution efficace pour limiter la consommation d'énergie informatique du terminal utilisateur et pour respecter des contraintes de latence du processus incluant la communication et le calcul proprement dit. Néanmoins, le déport de tâches de calcul engendre la génération d'une charge de communication supplémentaire aussi bien en liaison montante qu'en liaison descendante : le trafic de déport.

Les coûts de communication correspondants dépendent d'un certain nombre de paramètres, dont les conditions de propagation, le débit qui doit être assuré, les gains d'antenne en émission et en réception ainsi que la distance entre le terminal utilisateur et une station de base radio qui reçoit les données. De plus, les temps de communication peuvent être importants. Des phénomènes d'engorgement du réseau de backhaul peuvent survenir, par exemple si un grand nombre d'utilisateurs opèrent dans la même zone géographique.

Pour résoudre ces problèmes, l'informatique en périphérie multi-accès propose d'utiliser les capacités de calcul et de traitement de données d'équipements en périphérie de réseau appelés hôtes de périphérie mobile (ou MEH d'après l'Anglais : « mobile edge host »).

L'informatique en périphérie multi-accès offre aux développeurs d'applications et aux fournisseurs de contenu des capacités de « cloud computing » et un environnement de service informatique à la périphérie du réseau. Cet environnement se caractérise par des contraintes sur la latence très faible, un débit élevé ainsi qu'un accès en temps réel aux informations du réseau radio pouvant être exploitées par les applications. La technologie MEC permet aux opérateurs de déployer de manière flexible et rapide des applications et des services innovants vers les terminaux utilisateurs.

L'article de Wang Yichuan et Al intitulé « An energy saving based on task migration for mobile edge computing », paru dans Eurasip Journal on Wireless Communications and Networking, vol. 2019, n°1 27 mai 2019, expose que la migration de tâches complexes vers des serveurs de périphérie distants via des réseaux sans fil résout les problèmes de capacité de calcul insuffisante et de capacité de batterie limitée des terminaux mobiles. L'article de P Mach et Z Becvar intitulé "Mobile edge computing: A survey on architecture and computation offloading", paru dans IEEE Communications Surveys & Tutorials 19 (3), p. 1628-1656 fournit une revue des techniques mises en œuvre dans l'informatique en périphérie multi-accès, qui était auparavant appelé informatique en périphérie mobile. Par ailleurs, l'institut européen des normes de télécommunications (ETSI, d'après l'Anglais : « European Telecommunications Standards Institute ») a normalisé la technologie MEC.

La décision de déport de tâches de calcul depuis un terminal utilisateur vers un serveur en périphérie de réseau est effectuée en fonction de critères parmi lesquels les principaux sont la minimisation de consommation d'énergie au niveau du terminal utilisateur et le respect d'un délai d'exécution acceptable pour les tâches déportées.

Cependant, les communications liées au déport de tâches de calcul engendrent aussi une augmentation des champs électromagnétiques émis au niveau du terminal utilisateur.

### Exposé de l'invention

L'invention vise à résoudre les problèmes de la technique antérieure en fournissant un procédé de déport de tâches de calcul entre un terminal utilisateur et un équipement hôte de périphérie dans un réseau de communication selon une technique d'informatique en périphérie multi-accès, tel que revendiqué dans le jeu de revendications.

Grâce à l'invention, les ressources de communication et de calcul sont gérées conjointement avec l'exposition des utilisateurs aux champs électromagnétiques, ce qui permet une gestion holistique des ressources et de l'état d'exposition des utilisateurs aux champs électromagnétiques.

Selon une caractéristique préférée, le procédé de déport de tâches de calcul comporte des étapes de :
- Classification d'un ensemble de tâches de calcul en un sous-ensemble de tâches déportables et un sous-ensemble de tâches non déportables, en fonction de caractéristiques techniques des tâches de calcul,
- Identification des tâches dont le déport est nécessaire, en fonction de caractéristiques techniques du terminal utilisateur,
- Estimation, pour chaque tâche du sous-ensemble de tâches déportables, si le déport de la tâche présente un avantage en fonction d'une contrainte de latence et d'une réduction de la puissance associée au déport plutôt qu'au calcul sur le terminal utilisateur,
- Détermination si le déport peut être effectué en respectant le critère de minimisation dexposition aux champs électromagnétiques de l'utilisateur.

Selon une caractéristique préférée, la distance entre le corps de l'utilisateur et le dispositif d'émission/réception du terminal utilisateur est évaluée sur la base de données fournies par au moins l'un d'un proximètre, une centrale inertielle, un écran tactile équipant le terminal utilisateur ou par un suivi d'adaptation d'impédance de différentes antennes équipant le terminal utilisateur.

Selon une caractéristique préférée, une valeur instantanée d'exposition aux champs électromagnétiques de l'utilisateur est déterminée.

Selon une caractéristique préférée alternative, une valeur cumulée sur une fenêtre temporelle d'exposition aux champs électromagnétiques de l'utilisateur est déterminée. L'invention concerne aussi un contrôleur de déport de tâches de calcul entre un terminal utilisateur et un équipement hôte de périphérie dans un réseau de communication selon une technique d'informatique en périphérie multi-accès, tel que revendiqué dans le jeu de revendications.

L'invention concerne aussi un terminal utilisateur comportant un contrôleur de déport de tâches de calcul tel que précédemment présenté.

Le contrôleur de déport et le terminal utilisateur présentent des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par
- l'exposition aux champs électromagnétiques sur la base de cartes d'exposition spécifiques,
- une somme d'exposition aux champs électromagnétiques de l'utilisateur ou d'un groupe identifié de personnes, cette exposition étant due au terminal utilisateur ou à d'autres sources de champs électromagnétiques proches du terminal utilisateur

L'invention concerne aussi un terminal utilisateur comportant un contrôleur de déport de tâches de calcul tel que précédemment présenté.

Le contrôleur de déport et le terminal utilisateur présentent des avantages analogues à ceux précédemment présentés.

Dans un mode particulier de réalisation, les étapes du procédé selon l'invention sont mises en œuvre par des instructions de programme d'ordinateur.

En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

### Brève description des dessins

D'autres caractéristiques et avantages apparaîtront à la lecture de la description suivante d'un mode de réalisation préféré, donné à titre d'exemple non limitatif, décrit en référence aux figures dans lesquelles :
[Fig. 1] illustre un réseau de communication dans lequel un déport de tâches de calcul est mis en œuvre, selon un mode de réalisation de l'invention,
[Fig. 2] illustre un procédé de déport de tâches de calcul, selon un mode de réalisation de l'invention,

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

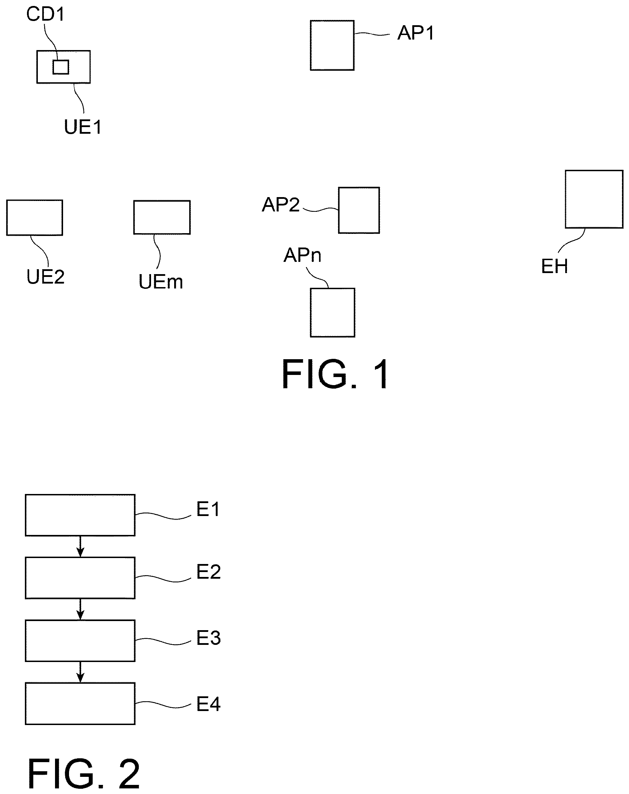

Selon un mode de réalisation préféré, représenté à la **figure 1****,** un réseau de communication comporte un ensemble de dispositifs adaptés pour communiquer et plus particulièrement communiquer selon le principe de l'informatique en périphérie multi-accès, dit MEC (d'après l'anglais : Multi-access Edge Computing).

Ainsi, le réseau de communication comporte, de manière schématique, des terminaux utilisateurs UE1, UE2, ...UEm, où m est un entier, qui sont notamment des téléphones mobiles ou encore des appareils dits « loT » (d'après l'Anglais Internet of Things) communiquant et connectables selon des techniques regroupées sous l'appellation d'internet des objets. Les dispositifs loT sont des dispositifs industriels ou domestiques, tels que des capteurs, des actionneurs et d'autres composants d'entrée/sortie, capables de collecter des données ou effectuer des actions à partir d'un environnement réel.

Les terminaux utilisateurs sont susceptibles d'être connectés à des points d'accès AP1, AP2, ... APn, où n est un entier, d'un réseau d'accès. Le réseau d'accès permet des connexions des terminaux utilisateurs avec un réseau cœur. Cependant, on considère ici des connexions et des transmissions de données entre les terminaux utilisateurs et un ou des équipements hôtes de périphérie EH, ou serveurs d'informatique en périphérie, qui sont plus proches des terminaux utilisateurs que le réseau cœur. Un unique équipement hôte de périphérie EH a été représenté à la figure 1 mais bien entendu leur nombre peut être plus important.

Les équipements hôtes de périphérie sont par exemple situés dans le réseau d'accès. Ils peuvent ainsi être au même emplacement que les points d'accès. En variante, ils peuvent être à d'autres emplacements, un lien supplémentaire est alors nécessaire, par exemple dans un réseau backhaul.

Bien entendu, les techniques et les dispositifs mis en œuvre varient en fonction des types de réseau : 4G, 5G, 6G, par exemple.

Pour la mise en œuvre de l'informatique en périphérie multi-accès, un contrôleur de déport de tâches de calcul équipe chaque terminal utilisateur UE1, UE2, ...UEm. Un unique contrôleur de déport de tâches de calcul CD1 a été représenté à la figure 1. En variante, le contrôleur de déport est dans le réseau d'accès, par exemple dans les équipements hôtes de périphérie. Si le contrôleur de déport est dans le réseau d'accès, des informations de signalisation relatives au contrôle d'accès sont échangées entre lui et les terminaux utilisateurs.

La fonction du contrôleur de déport est de planifier si, quand et comment se déroule le déport de tâches de calcul entre un terminal utilisateur et un équipement hôte de périphérie. Comme détaillé dans la suite, le contrôleur de déport selon l'invention détermine notamment la puissance d'émission et la directivité spécifique des antennes du terminal utilisateur.

Le contrôleur de déport dialogue avec un orchestrateur situé dans le réseau et tel que défini par la norme ETSI précédemment citée. L'orchestrateur contrôle notamment si un déport de tâches de calcul avec des performances demandées est possible côté réseau. Le déport de tâches de calcul depuis un terminal utilisateur vers un équipement hôte de périphérie comporte les phases suivantes :
- signalisation pour identifier la cible de la requête de déport et demande à l'orchestrateur du MEC de pouvoir accéder à un tel service. Dans cette phase, les paramètres de qualité de service, dits QoS (d'après l'anglais Quality of Service) sont négociés et accordés ;
- communication, au cours de laquelle les bits nécessaires à l'exécution du calcul sont transmis, ou déportés, depuis le terminal utilisateur vers un point d'accès puis vers l'équipement hôte de périphérie ;
- calcul, au cours de laquelle les bits sont traités par l'équipement hôte de périphérie ; cette phase peut inclure la mise en place de clusters locaux ad hoc pour fédérer des unités de calcul ou des ressources de cache ;
- communication, dans laquelle les résultats de l'exécution de la tâche de calcul déportée sont retransmis depuis l'équipement hôte de périphérie jusqu'au terminal utilisateur, ou éventuellement vers un ou plusieurs autres terminaux utilisateurs.

Le contrôleur de déport de tâches de calcul est adapté pour effectuer le contrôle de déport de la façon suivante.

Le contrôleur de déport de tâches de calcul considère tout d'abord un ensemble de tâches de calcul et les classifie en un sous-ensemble de tâches déportables et un sous-ensemble de tâches non déportables, en fonction de caractéristiques techniques des tâches de calcul.

Les caractéristiques techniques d'une tâche de calcul qui sont prises en compte sont par exemple la dépendance matérielle du calcul de la tâche ou une dépendance de données entre instructions.

Le contrôleur de déport de tâches de calcul identifie ensuite les tâches dont le déport est nécessaire, en fonction de caractéristiques techniques du terminal utilisateur.

Le déport d'une tâche est considéré comme nécessaire lorsque le calcul local de la tâche est coûteux ou impossible. Cette décision est basée sur une série de tests prenant en compte la capacité de calcul du terminal utilisateur, les besoins en mémoire et la consommation de batterie mobile. Une tâche est classée comme «devrait être déportée» si l'une des conditions suivantes est remplie :
- Le niveau de la batterie du terminal utilisateur est critique,
- La mémoire requise pour la tâche est supérieure au pourcentage autorisé de la mémoire disponible sur le terminal utilisateur,
- La tâche nécessite une capacité de calcul supérieure à un pourcentage prédéfini de la capacité totale disponible sur le terminal utilisateur,
- La tâche nécessite un logiciel qui n'est pas présent dans le terminal utilisateur,
- La tâche nécessite des données qui ne sont pas présentes dans le terminal utilisateur.

Il convient de noter que les seuils de déport définis ci-dessus sont des paramètres qui peuvent être définis par l'utilisateur via son système d'exploitation d'équipement mobile.

Le contrôleur de déport de tâches de calcul estime ensuite, pour chaque tâche du sous-ensemble de tâches déportables, si le déport de la tâche présente un avantage en fonction d'une contrainte de latence et d'une réduction de la puissance associée au déport plutôt qu'au calcul sur le terminal utilisateur.

Le résultat de cette estimation comporte un ensemble d'informations :
- l'estimation des caractéristiques du trafic de déport telles que l'intensité du trafic, la périodicité, les contraintes de temps, la taille de la génération de paquets de déport à envoyer à l'équipement hôte de périphérie (taille de paquet en liaison montante) et, dans certains cas, la taille de paquets MEC reçus en liaison descendante depuis l'équipement hôte de périphérie,
- l'estimation de la puissance radiofréquence de transmission depuis le terminal utilisateur vers le point d'accès pour le déport de la tâche de calcul,
- le diagramme d'antenne pour la communication depuis le terminal utilisateur vers le point d'accès.

Conjointement à l'estimation de l'avantage au déport d'une tâche de calcul, le contrôleur de déport de tâches de calcul estime si le déport de la tâche de calcul peut être effectué en respectant un critère lié à l'exposition aux champs électromagnétiques de l'utilisateur. On cherche à minimiser l'exposition aux champs électromagnétiques d'un utilisateur du terminal utilisateur.

Une valeur d'exposition aux champs électromagnétiques de l'utilisateur est calculée en fonction d'un ou de plusieurs des critères suivants :
- une mesure de dosimétrie électromagnétique radiofréquence momentanée ou une dose cumulée sur une fenêtre temporelle,
- l'exposition aux champs électromagnétiques sur la base de cartes d'exposition spécifiques,
- une somme d'exposition aux champs électromagnétiques de l'utilisateur ou d'un groupe identifié de personnes, cette exposition étant due au terminal utilisateur ou à d'autres sources de champs électromagnétiques proches du terminal utilisateur.

La mesure de dosimétrie électromagnétique radiofréquence est basée à la fois sur la distance entre l'utilisateur et un dispositif émetteur/récepteur du terminal utilisateur et sur la puissance transmise par le terminal utilisateur pour le déport de tâches de calcul. La distance entre le corps de l'utilisateur et le dispositif d'émission/réception du terminal utilisateur est liée à un couplage d'énergie électromagnétique entre le corps de l'utilisateur et le dispositif d'émission/réception du terminal utilisateur. Ce couplage dépend du diagramme d'antenne de l'antenne du terminal utilisateur.

La distance entre l'utilisateur et le dispositif émetteur/récepteur du terminal utilisateur est donc déterminée. Pour cela, il est possible d'utiliser un proximètre, une centrale inertielle, l'interface homme machine du terminal utilisateur ou encore l'écran tactile du terminal utilisateur. Lors de son utilisation, l'écran tactile permet de savoir où sont les doigts par rapport au terminal et permet aussi de diriger l'émission vers les antennes qui minimisent l'exposition électromagnétique de l'utilisateur. L'analyse de l'ensemble des données de ces capteurs permet d'affiner le positionnement du corps de l'utilisateur par rapport au terminal, sachant que certaines parties du corps sont plus critiques (ex. tête).

Une autre possibilité pour déterminer la distance physique entre l'utilisateur et le dispositif émetteur/récepteur du terminal utilisateur est de surveiller l'adaptation d'impédance des différentes antennes sur le terminal utilisateur pour évaluer le contexte proche autour du terminal utilisateur (manipulation, proximité de la tête). En effet, le matériau diélectrique du corps de l'utilisateur perturbe d'autant plus le comportement nominal de ces antennes que diminue la distance entre l'utilisateur et les antennes.

Une fois analysées, toutes ces informations produisent un environnement de contexte proche et donc un statut d'utilisation du terminal utilisateur (navigation web, appel vocal à l'oreille, manipulation ou appareil non porté) qui sont associés à une valeur d'exposition aux champs électromagnétiques de l'utilisateur.

L'exposition aux champs électromagnétiques de l'utilisateur est estimée à partir de quatre informations :
- la ou les bande(s) de fréquence d'émission,
- la position du corps de l'utilisateur par rapport au terminal,
- la puissance radiofréquence transmise depuis l'antenne d'émission,
- le diagramme de rayonnement, surtout si ce dernier est reconfigurable (cas des réseaux d'antennes).

A partir de ces informations en temps réel, la distribution spatiale de l'énergie électromagnétique absorbée dans les différentes parties du corps humain est estimée, en utilisant également des modèles (issus de mesures ou de simulations) sous la forme de table de référence afin de simplifier le calcul.

Comme déjà énoncé, la valeur d'exposition aux champs électromagnétiques de l'utilisateur est soit une valeur instantanée, soit une valeur cumulée sur une fenêtre temporelle.

Dans les deux cas, la valeur d'exposition aux champs électromagnétiques de l'utilisateur est comparée à une valeur seuil d'exposition aux champs électromagnétiques exprimant une limite d'exposition. La valeur seuil d'exposition aux champs électromagnétiques peut varier en fonction des utilisateurs.

Le résultat de l'estimation si le déport de la tâche de calcul peut être effectué en respectant un critère lié à l'exposition aux champs électromagnétiques de l'utilisateur est une décision parmi les suivantes :
- effectuer le déport de la tâche de calcul depuis le terminal utilisateur vers l'équipement hôte de périphérie,
- effectuer le déport de la tâche de calcul depuis le terminal utilisateur vers l'équipement hôte de périphérie, de manière conditionnelle,
- ne pas effectuer le déport de la tâche de calcul pendant une fenêtre temporelle donnée.

Dans le deuxième cas, le déport est contraint à une ou plusieurs de conditions parmi:
a) limiter la puissance de transmission du terminal utilisateur et donc réduire la capacité en liaison montante,
b) effectuer un déport partiel et limiter les données de trafic en liaison montante transmises au point d'accès,
c) effectuer un déport partiel et limiter les données de trafic en liaison descendante transmises par le point d'accès,
d) conditions cumulées b + c,
e) adapter le diagramme de rayonnement de l'antenne du terminal utilisateur pour réduire l'exposition aux champs électromagnétiques pour l'utilisateur compte tenu d'une cible d'exposition maximale (momentanée ou cumulative).

Par « déport partiel », on entend un déport de tâches de calcul intermittent : une partie des calculs est effectuée par l'équipement hôte de périphérie après déport, et une autre partie des calculs est effectuée par le terminal utilisateur.

La **figure 2** représente le fonctionnement du contrôleur de déport sous la forme d'un procédé comportant des étapes E1 à E4. Ce procédé s'inscrit dans un procédé de déport de tâches de calcul entre un terminal utilisateur et un équipement hôte de périphérie dans un réseau de communication selon une technique d'informatique en périphérie multi-accès, comportant des étapes de :
- Déport de données nécessaires à l'exécution du calcul depuis le terminal utilisateur vers l'équipement hôte de périphérie,
- Transmission de données résultant du calcul effectué par l'équipement hôte de périphérie, depuis l'équipement hôte de périphérie vers le terminal utilisateur.

Ces étapes sont connues en soi et ne seront pas détaillées ici.

Le procédé de déport de tâches de calcul est caractérisé en ce que le déport de données est contrôlé sur la base de critères conjoints d'efficacité énergétique et de minimisation d'exposition aux champs électromagnétiques d'un utilisateur du terminal utilisateur. C'est donc le contrôle du déport de données qui est détaillé dans la suite.

L'étape E1 est une classification d'un ensemble de tâches de calcul en un sous-ensemble de tâches déportables et un sous-ensemble de tâches non déportables, en fonction de caractéristiques techniques des tâches de calcul.

Les caractéristiques techniques d'une tâche de calcul qui sont prises en compte sont par exemple la dépendance matérielle du calcul de la tâche ou une dépendance de données entre instructions.

L'étape suivante E2 est une identification des tâches dont le déport est nécessaire, en fonction de caractéristiques techniques du terminal utilisateur.

Le déport d'une tâche est considéré comme nécessaire lorsque le calcul local de la tâche est coûteux ou impossible. Cette décision est basée sur une série de tests prenant en compte la capacité de calcul du terminal utilisateur, les besoins en mémoire et la consommation de batterie mobile. Une tâche est classée comme «devrait être déportée» si l'une des conditions suivantes est remplie :
- Le niveau de la batterie du terminal utilisateur est critique,
- La mémoire requise pour la tâche est supérieure au pourcentage autorisé de la mémoire disponible sur le terminal utilisateur,
- La tâche nécessite une capacité de calcul supérieure à un pourcentage prédéfini de la capacité totale disponible sur le terminal utilisateur,
- La tâche nécessite un logiciel qui n'est pas présent dans le terminal utilisateur,
- La tâche nécessite des données qui ne sont pas présentes dans le terminal utilisateur.

Il convient de noter que les seuils de déport définis ci-dessus sont des paramètres qui peuvent être définis par l'utilisateur via son système d'exploitation d'équipement mobile. L'étape suivante E3 est une estimation pour déterminer, pour chaque tâche du sous-ensemble de tâches déportables, si le déport de la tâche présente un avantage en fonction d'une contrainte de latence et d'une réduction de la puissance associée au déport plutôt qu'au calcul sur le terminal utilisateur.

Le résultat de cette estimation comporte un ensemble d'informations :
- l'estimation des caractéristiques du trafic de déport telles que l'intensité du trafic, la périodicité, les contraintes de temps, la taille de la génération de paquets de déport à envoyer à l'équipement hôte de périphérie (taille de paquet en liaison montante) et, dans certains cas, la taille de paquets MEC reçus en liaison descendante depuis l'équipement hôte de périphérie,
- l'estimation de la puissance radiofréquence de transmission depuis le terminal utilisateur vers le point d'accès pour le déport de la tâche de calcul,
- le diagramme d'antenne pour la communication depuis le terminal utilisateur vers le point d'accès.

L'étape suivante E4 est une estimation pour déterminer si le déport de la tâche de calcul peut être effectué en respectant un critère lié à l'exposition aux champs électromagnétiques de l'utilisateur. On rappelle que l'on cherche à minimiser l'exposition aux champs électromagnétiques d'un utilisateur du terminal utilisateur.

Cette estimation est effectuée conjointement à l'estimation de l'avantage au déport d'une tâche de calcul.

Une valeur d'exposition aux champs électromagnétiques de l'utilisateur est calculée en fonction d'un ou de plusieurs des critères suivants :
- une mesure de dosimétrie électromagnétique radiofréquence momentanée ou une dose cumulée sur une fenêtre temporelle,
- l'exposition aux champs électromagnétiques sur la base de cartes d'exposition spécifiques,
- une somme d'exposition aux champs électromagnétiques de l'utilisateur ou d'un groupe identifié de personnes, cette exposition étant due au terminal utilisateur ou à d'autres sources de champs électromagnétiques proches du terminal utilisateur.

La mesure de dosimétrie électromagnétique radiofréquence est basée à la fois sur la distance entre l'utilisateur et un dispositif émetteur/récepteur du terminal utilisateur et sur la puissance transmise par le terminal utilisateur pour le déport de tâches de calcul. La distance entre le corps de l'utilisateur et le dispositif d'émission/réception du terminal utilisateur est liée à un couplage d'énergie électromagnétique entre le corps de l'utilisateur et le dispositif d'émission/réception du terminal utilisateur. Ce couplage dépend du diagramme d'antenne de l'antenne du terminal utilisateur.

La distance physique entre l'utilisateur et le dispositif émetteur/récepteur du terminal utilisateur est donc déterminée. Pour cela, il est possible d'utiliser un proximètre, une centrale inertielle, l'interface homme machine du terminal utilisateur ou encore l'écran tactile du terminal utilisateur. Lors de son utilisation, l'écran tactile permet de savoir où sont les doigts par rapport au terminal et permet aussi de diriger l'émission vers les antennes qui minimisent l'exposition électromagnétique de l'utilisateur. L'analyse de l'ensemble des données de ces capteurs permet d'affiner le positionnement du corps de l'utilisateur par rapport au terminal, sachant que certaines parties du corps sont plus critiques (ex. tête).

Une autre possibilité pour déterminer la distance physique entre l'utilisateur et le dispositif émetteur/récepteur du terminal utilisateur est de surveiller l'adaptation d'impédance des différentes antennes sur le terminal utilisateur pour évaluer le contexte proche autour du terminal utilisateur (manipulation, proximité de la tête). En effet, le matériau diélectrique du corps de l'utilisateur perturbe d'autant plus le comportement nominal de ces antennes que diminue la distance entre l'utilisateur et les antennes.

Une fois analysées, toutes ces informations produisent un environnement de contexte proche et donc un statut d'utilisation du terminal utilisateur (navigation web, appel vocal à l'oreille, manipulation ou appareil non porté) qui sont associés à une valeur d'exposition aux champs électromagnétiques de l'utilisateur.

L'exposition aux champs électromagnétiques de l'utilisateur est estimée à partir de quatre informations :
- la ou les bande(s) de fréquence d'émission,
- la position du corps de l'utilisateur par rapport au terminal,
- la puissance radiofréquence transmise depuis l'antenne d'émission,
- le diagramme de rayonnement, surtout si ce dernier est reconfigurable (cas des réseaux d'antennes).

A partir de ces informations en temps réel, la distribution spatiale de l'énergie électromagnétique absorbée dans les différentes parties du corps humain est estimée, en utilisant également des modèles (issus de mesures ou de simulations) sous la forme de table de référence afin de simplifier le calcul.

Comme déjà énoncé, la valeur d'exposition aux champs électromagnétiques de l'utilisateur est soit une valeur instantanée, soit une valeur cumulée sur une fenêtre temporelle.

Dans les deux cas, la valeur d'exposition aux champs électromagnétiques de l'utilisateur est comparée à une valeur seuil d'exposition aux champs électromagnétiques exprimant une limite d'exposition. La valeur seuil d'exposition aux champs électromagnétiques peut varier en fonction des utilisateurs.

Le résultat de l'estimation si le déport de la tâche de calcul peut être effectué en respectant un critère lié à l'exposition aux champs électromagnétiques de l'utilisateur est une décision parmi les suivantes :
- effectuer le déport de la tâche de calcul depuis le terminal utilisateur vers l'équipement hôte de périphérie,
- effectuer le déport de la tâche de calcul depuis le terminal utilisateur vers l'équipement hôte de périphérie, de manière conditionnelle,
- ne pas effectuer le déport de la tâche de calcul pendant une fenêtre temporelle donnée.

Dans le deuxième cas, le déport est contraint à une ou plusieurs de conditions parmi:
a) limiter la puissance de transmission du terminal utilisateur et donc réduire la capacité en liaison montante,
b) effectuer un déport partiel et limiter les données de trafic en liaison montante transmises au point d'accès,
c) effectuer un déport partiel et limiter les données de trafic en liaison descendante transmises par le point d'accès,
d) conditions cumulées b + c,
e) adapter le diagramme de rayonnement de l'antenne du terminal utilisateur pour réduire l'exposition aux champs électromagnétiques pour l'utilisateur compte tenu d'une cible d'exposition maximale (momentanée ou cumulative).

Par « déport partiel », on entend un déport de tâches de calcul intermittent : une partie des calculs est effectuée par l'équipement hôte de périphérie après déport, et une autre partie des calculs est effectuée par le terminal utilisateur.

## Revendications

1. Procédé de déport de tâches de calcul entre un terminal utilisateur (UE1, UE2, UEm) et un équipement hôte de périphérie (EH) dans un réseau de communication selon une technique d'informatique en périphérie multi-accès, comportant des étapes de :
- Déport de données nécessaires à l'exécution du calcul depuis le terminal utilisateur vers l'équipement hôte de périphérie,
- Transmission de données résultant du calcul effectué par l'équipement hôte de périphérie, depuis l'équipement hôte de périphérie vers le terminal utilisateur,
le déport de tâches de calcul étant contrôlé sur la base d'un critère d'efficacité énergétique,
le procédé étant **caractérisé en ce que** le déport de tâches de calcul est en outre contrôlé par un critère de minimisation d'exposition aux champs électromagnétiques d'un utilisateur du terminal utilisateur, une valeur d'exposition aux champs électromagnétiques de l'utilisateur étant calculée en fonction d'un ou de plusieurs des critères suivants :
- une mesure de dosimétrie électromagnétique radiofréquence momentanée ou une dose cumulée sur une fenêtre temporelle, la mesure de dosimétrie électromagnétique radiofréquence étant basée à la fois sur la distance entre l'utilisateur et un dispositif émetteur/récepteur du terminal utilisateur et sur la puissance transmise par le terminal utilisateur pour le déport de tâches de calcul,
- l'exposition aux champs électromagnétiques de l'utilisateur sur la base de cartes d'exposition spécifiques,
- une somme d'exposition aux champs électromagnétiques de l'utilisateur ou d'un groupe identifié de personnes, cette exposition étant due au terminal utilisateur ou à d'autres sources de champs électromagnétiques proches du terminal utilisateur.

2. Procédé de déport de tâches de calcul selon la revendication 1, comportant des étapes de
- Classification (E1) d'un ensemble de tâches de calcul en un sous-ensemble de tâches déportables et un sous-ensemble de tâches non déportables, en fonction de caractéristiques techniques des tâches de calcul,
- Identification (E2) des tâches dont le déport est nécessaire, en fonction de caractéristiques techniques du terminal utilisateur,
- Estimation (E3), pour chaque tâche du sous-ensemble de tâches déportables, si le déport de la tâche présente un avantage en fonction d'une contrainte de latence et d'une réduction de la puissance associée au déport plutôt qu'au calcul sur le terminal utilisateur,
- Détermination (E4) si le déport peut être effectué en respectant le critère de minimisation d'exposition aux champs électromagnétiques de l'utilisateur.

3. Procédé de déport de tâches de calcul selon la revendication 1, dans lequel la distance entre le corps de l'utilisateur et le dispositif d'émission/réception du terminal utilisateur est évaluée sur la base de données fournies par au moins l'un d'un proximètre, une centrale inertielle, un écran tactile équipant le terminal utilisateur ou par un suivi d'adaptation d'impédance de différentes antennes équipant le terminal utilisateur.

4. Procédé de déport de tâches de calcul selon l'une quelconque des revendications 1 à 3, dans lequel une valeur instantanée d'exposition aux champs électromagnétiques de l'utilisateur est déterminée.

5. Procédé de déport de tâches de calcul selon l'une quelconque des revendications 1 à 3, dans lequel une valeur cumulée sur une fenêtre temporelle d'exposition aux champs électromagnétiques de l'utilisateur est déterminée.

6. Contrôleur (CD1) de déport de tâches de calcul entre un terminal utilisateur (UE1, UE2, UEm) et un équipement hôte de périphérie (EH) dans un réseau de communication selon une technique d'informatique en périphérie multi-accès, le terminal utilisateur et l'équipement hôte de périphérie étant adaptés pour :
- Déporter des données nécessaires à l'exécution du calcul depuis le terminal utilisateur vers l'équipement hôte de périphérie,
- Transmettre des données résultant du calcul effectué par l'équipement hôte de périphérie, depuis l'équipement hôte de périphérie vers le terminal utilisateur,
le contrôleur étant adapté à contrôler le déport de tâches de calcul sur la base d'un critère d'efficacité énergétique,
le contrôleur étant **caractérisé en ce qu'**il est en outre adapté à contrôler le déport de tâches de calcul sur la base d'un critère de minimisation d'exposition aux champs électromagnétiques d'un utilisateur du terminal utilisateur, une valeur d'exposition aux champs électromagnétiques de l'utilisateur étant calculée en fonction d'un ou de plusieurs des critères suivants :
- - une mesure de dosimétrie électromagnétique radiofréquence momentanée ou une dose cumulée sur une fenêtre temporelle, la mesure de dosimétrie électromagnétique radiofréquence étant basée à la fois sur la distance entre l'utilisateur et un dispositif émetteur/récepteur du terminal utilisateur et sur la puissance transmise par le terminal utilisateur pour le déport de tâches de calcul,
- - l'exposition aux champs électromagnétiques de l'utilisateur sur la base de cartes d'exposition spécifiques,
- - une somme d'exposition aux champs électromagnétiques de l'utilisateur ou d'un groupe identifié de personnes, cette exposition étant due au terminal utilisateur ou à d'autres sources de champs électromagnétiques proches du terminal utilisateur.

7. Terminal utilisateur comportant un contrôleur de déport de tâches de calcul selon la revendication 6.

8. Programme d'ordinateur comportant des instructions pour l'exécution des étapes du procédé selon l'une quelconque des revendications 1 à 5 lorsque ledit programme est exécuté par un ordinateur.

9. Support d'enregistrement lisible par un ordinateur sur lequel est enregistré un programme d'ordinateur selon la revendication 8.

## Patentansprüche

1. Verfahren zur Auslagerung von Berechnungsaufgaben zwischen einem Benutzerendgerät (UE1, UE2, UEm) und einer Host- Peripherieausrüstung (EH) in einem Kommunikationsnetzwerk gemäß einer Multi-Access-Edge-Computing-Technik, umfassend die folgenden Schritte:
- Auslagern der für die Ausführung der Berechnung erforderlichen Daten von dem Benutzerendgerät an die Host-Peripherieausrüstung,
- Übertragen von Daten, die sich aus der von der Host-Peripherieausrüstung durchgeführten Berechnung ergeben, von der Host-Peripherieausrüstung zu dem Benutzerendgerät, wobei die Auslagerung von Berechnungsaufgaben auf der Grundlage eines Kriteriums der Energieeffizienz gesteuert wird,
wobei das Verfahren **dadurch gekennzeichnet ist, dass** das Auslagern von Berechnungsaufgaben ferner durch ein Kriterium der Minimierung der Exposition eines Benutzers des Benutzerendgeräts gegenüber elektromagnetischen Feldern gesteuert wird, wobei ein Wert der Exposition des Benutzers gegenüber elektromagnetischen Feldern in Abhängigkeit von einem oder mehreren der folgenden Kriterien berechnet wird:
- einer Messung der momentanen elektromagnetischen Hochfrequenzdosimetrie oder einer kumulativen Dosis über ein Zeitfenster, wobei die Messung der elektromagnetischen Hochfrequenzdosimetrie sowohl auf der Entfernung zwischen dem Benutzer und einer Sende-/Empfangsvorrichtung des Benutzerendgeräts als auch auf der von dem Benutzerendgerät übertragenen Leistung für das Auslagern von Berechnungsaufgaben basiert,
- der Exposition des Benutzers gegenüber elektromagnetischen Feldern auf der Grundlage spezifischer Expositionskarten,
- einer Summe der Exposition des Benutzers oder einer identifizierten Gruppe von Personen gegenüber elektromagnetischen Feldern, wobei diese Exposition auf das Benutzerendgerät oder andere Quellen elektromagnetischer Felder in der Nähe des Benutzerendgeräts zurückzuführen ist.

2. Verfahren zur Auslagerung von Berechnungsaufgaben nach Anspruch 1, umfassend die folgenden Schritte
- Klassifizieren (E1) einer Gruppe von Berechnungsaufgaben in eine Untergruppe von auslagerbaren Aufgaben und eine Untergruppe von nicht auslagerbaren Aufgaben in Abhängigkeit von den technischen Merkmalen der Berechnungsaufgaben,
- Identifizieren (E2) der Aufgaben, für die eine Auslagerung erforderlich ist, in Abhängigkeit von den technischen Merkmalen des Benutzerendgeräts,
- Schätzen (E3), für jede Aufgabe der Untergruppe von auslagerbaren Aufgaben, ob die Auslagerung der Aufgabe einen Vorteil in Abhängigkeit von einer Latenzbeschränkung und einer Leistungsreduzierung im Zusammenhang mit der Auslagerung gegenüber der Berechnung auf dem Benutzerendgerät aufweist,
- Bestimmen (E4), ob die Auslagerung unter Einhaltung des Kriteriums der Minimierung der Exposition des Benutzers gegenüber elektromagnetischen Feldern durchgeführt werden kann.

3. Verfahren zur Auslagerung von Berechnungsaufgaben nach Anspruch 1, wobei der Abstand zwischen dem Körper des Benutzers und der Sende-/Empfangsvorrichtung des Benutzerendgeräts auf der Grundlage von Daten bewertet wird, die von mindestens einem von einem Proximeter, einer Trägheitsmesseinheit, einem Touchscreen, mit dem das Benutzerendgerät ausgestattet ist, oder durch eine Impedanzanpassungsverfolgung verschiedener Antennen, mit denen das Benutzerendgerät ausgestattet ist, bereitgestellt werden.

4. Verfahren zur Auslagerung von Berechnungsaufgaben nach einem der Ansprüche 1 bis 3, wobei ein momentaner Wert der Exposition des Benutzers gegenüber elektromagnetischen Feldern bestimmt wird.

5. Verfahren zur Auslagerung von Berechnungsaufgaben nach einem der Ansprüche 1 bis 3, wobei ein kumulierter Wert über ein Zeitfenster der Exposition des Benutzers gegenüber elektromagnetischen Feldern bestimmt wird.

6. Steuerung (CD1) zur Auslagerung von Berechnungsaufgaben zwischen einem Benutzerendgerät (UE1, UE2, UEm) und einer Host-Peripherieausrüstung (EH) in einem Kommunikationsnetzwerk gemäß einer Multi-Access-Edge-Computing-Technik, wobei das Benutzerendgerät und die Host-Peripherieausrüstung für Folgendes ausgelegt sind:
- Auslagern der für die Ausführung der Berechnung erforderlichen Daten von dem Benutzerendgerät an die Host-Peripherieausrüstung,
- Übertragen von Daten, die sich aus der von der Host-Peripherieausrüstung durchgeführten Berechnung ergeben, von der Host-Peripherieausrüstung zu dem Benutzerendgerät,
wobei die Steuerung dazu ausgelegt ist, die Auslagerung von Berechnungsaufgaben auf der Grundlage eines Kriteriums der Energieeffizienz zu steuern,
wobei die Steuerung **dadurch gekennzeichnet ist, dass** sie ferner dazu ausgelegt ist, die Auslagerung von Berechnungsaufgaben auf der Grundlage eines Kriteriums der Minimierung der Exposition eines Benutzers des Benutzerendgeräts gegenüber elektromagnetischen Feldern zu steuern, wobei ein Wert der Exposition des Benutzers gegenüber elektromagnetischen Feldern in Abhängigkeit von einem oder mehreren der folgenden Kriterien berechnet wird:
- einer Messung der momentanen elektromagnetischen Hochfrequenzdosimetrie oder einer kumulativen Dosis über ein Zeitfenster, wobei die Messung der elektromagnetischen Hochfrequenzdosimetrie sowohl auf der Entfernung zwischen dem Benutzer und einer Sende-/Empfangsvorrichtung des Benutzerendgeräts als auch auf der von dem Benutzerendgerät übertragenen Leistung für das Auslagern von Berechnungsaufgaben basiert,
- der Exposition des Benutzers gegenüber elektromagnetischen Feldern auf der Grundlage spezifischer Expositionskarten,
- einer Summe der Exposition des Benutzers oder einer identifizierten Gruppe von Personen gegenüber elektromagnetischen Feldern, wobei diese Exposition auf das Benutzerendgerät oder andere Quellen elektromagnetischer Felder in der Nähe des Benutzerendgeräts zurückzuführen ist.

7. Benutzerendgerät, das eine Steuerung zur Auslagerung von Berechnungsaufgaben nach Anspruch 6 umfasst.

8. Computerprogramm, das Anweisungen zur Ausführung der Schritte des Verfahrens nach einem der Ansprüche 1 bis 5 umfasst, wenn das Programm von einem Computer ausgeführt wird.

9. Computerlesbares Speichermedium, auf dem ein Computerprogramm nach Anspruch 8 gespeichert ist.

## Claims

1. Method for offloading calculation tasks between a user terminal (UE1, UE2, UEm) and a piece of edge host equipment (EH) in a communication network according to a multi-access edge computing technique, including steps of:
- Offloading data necessary for the execution of the calculation from the user terminal to the piece of edge host equipment,
- Transmitting data resulting from the calculation carried out by the piece of edge host equipment, from the piece of edge host equipment to the user terminal,
the offloading of calculation tasks being controlled on the basis of a criterion of energy efficiency,
the method being **characterized in that** the offloading of calculation tasks is further controlled by a criterion of minimization of exposure of a user of the user terminal to electromagnetic fields, a value of exposure of the user to electromagnetic fields being calculated according to one or more of the following criteria:
- a measurement of momentary radiofrequency electromagnetic dosimetry or a cumulative dose over a time window, the measurement of momentary radiofrequency electromagnetic dosimetry being based both on the distance between the user and an emitter/receiver device of the user terminal and on the power transmitted by the user terminal for offloading calculation tasks,
- the exposure of the user to electromagnetic fields on the basis of specific exposure maps,
- a sum of exposure of the user or of an identified group of people to electromagnetic fields, this exposure being caused by the user terminal or by other sources of electromagnetic fields close to the user terminal.

2. Method for offloading calculation tasks according to claim 1, including steps of
- Classifying (E1) a set of calculation tasks into a subset of offloadable tasks and a subset of non-offloadable tasks, according to the technical characteristics of the calculation tasks,
- Identifying (E2) the tasks for which offloading is necessary, according to technical characteristics of the user terminal,
- Estimating (E3), for each task of the subset of offloadable tasks, whether the offloading of the task presents an advantage according to a constraint of latency and a reduction of the power associated with the offloading rather than with the calculation on the user terminal,
- Determining (E4) whether the offloading can be carried out while respecting the criterion of minimization of exposure of the user to electromagnetic fields.

3. Method for offloading calculation tasks according to claim 1, wherein the distance between the body of the user and the emission/reception device of the user terminal is evaluated on the basis of data provided by at least one out of a proximity sensor, an inertial measurement unit, a touch screen provided in the user terminal or by a monitoring of adaptation of impedance of various antennas provided in the user terminal.

4. Method for offloading calculation tasks according to any one of claims 1 to 3, wherein an instantaneous value of exposure of the user to electromagnetic fields is determined.

5. Method for offloading calculation tasks according to any one of claims 1 to 3, wherein a cumulative value over a time window of exposure of the user to electromagnetic fields is determined.

6. Controller (CD1) of offloading of calculation tasks between a user terminal (UE1, UE2, UEm) and a piece of edge host equipment (EH) in a communication network according to a multi-access edge computing technique, the user terminal and the piece of edge host equipment being adapted to:
- Offload data necessary for the execution of the calculation from the user terminal to the piece of edge host equipment,
- Transmit data resulting from the calculation carried out by the piece of edge host equipment, from the piece of edge host equipment to the user terminal,
the controller being adapted to control the offloading of calculation tasks on the basis of a criterion of energy efficiency,
the controller being **characterized in that** it is further adapted to control the offloading of calculation tasks on the basis of a criterion of minimization of exposure of a user of the user terminal to electromagnetic fields, a value of exposure of the user to electromagnetic fields being calculated according to one or more of the following criteria:
- - a measurement of momentary radiofrequency electromagnetic dosimetry or a cumulative dose over a time window, the measurement of radiofrequency electromagnetic dosimetry being based both on the distance between the user and an emitter/receiver device of the user terminal and on the power transmitted by the user terminal for offloading calculation tasks,
- - the exposure of the user to electromagnetic fields on the basis of specific exposure maps,
- - a sum of exposure of the user or of an identified group of people to electromagnetic fields, this exposure being caused by the user terminal or by other sources of electromagnetic fields close to the user terminal.

7. User terminal including a controller of offloading of calculation tasks according to claim 6.

8. Computer program including instructions for the execution of the steps of the method according to any one of claims 1 to 5 when said program is executed by a computer.

9. Recording medium readable by a computer on which a computer program according to claim 8 is recorded.
